# EUROPEAN PATENT APPLICATION

(11) **EP 1 884 887 A1**
(43) Date of publication of application: **06.02.2008**
(21) Application number: 07112870.6
(22) Date of filing: 20.07.2007
(51) Int. Cl.: G06K 19/073, G06K 19/067

(54) **Security document**

(30) Priority: 31.07.2006 GB 0615196
(71) Applicant: De La Rue International Limited, Basingstoke, Hants RG22 4BS (GB)
(72) Inventor: Snelling, James Peter, Andover, Hampshire SP11 6DF (GB); Isherwood, Roland, Whitchurch, Hampshire RG28 7QJ (GB)
(74) Representative: Skone James, Robert Edmund

(57) **Abstract**

A security document is disclosed comprising a radio frequency identification (RFID) tag (6), an RFID tag antenna (7), an electromagnetic shield (8) for restricting interrogation of the RFID tag through the RFID tag antenna, and an electrostatic charge indicating device for generating a radio frequency (RF) signal. The electrostatic charge indicating device (20) comprises a plurality of conductive particles (21) of predetermined dimensions disposed in intimate contact with a material which exhibits a triboelectric property (22) such that electrostatic charge built up on the material with the triboelectric property will discharge through the conductive particles, thereby generating the RF signal.

## Description

The present invention relates to a security document, for example a passport or other document of value.

It is desirable to provide security documents with various means to enable their detection, authentication and identification. It is known to provide security documents with items such as luminescent prints, magnetic features, conductive features, embedded threads, fibres and planchettes, all of which are well described in the art. Such approaches are used extensively and provide effective methods for detecting documents. However there is a constant need to change such security features and introduce new ones in order to make counterfeiting difficult.

In addition to this there is a need to provide security documents with means which carry information which may not be readily apparent by a visual inspection of the document, but may instead be accessed by an appropriate reading device. Such means can, for example, be used to replicate information which is visible on the security document, so that correct correspondence between the visible and non-visible information can be used to check that the document is genuine. Further, it may be possible to store in this way additional information which is not easily or desirably included in the visual information, such as biometric data or additional security information.

One known technique for storing such non-visible information on the security document is the provision of a radio frequency identification (RFID) tag on the security document. The RFID tag essentially comprises an integrated circuit, on which is stored information which can be accessed via an antenna to which the tag is connected. A separate reading apparatus uses an RF signal to induce a current in the antenna, thus activating the RFID tag which sends a signal containing the information to the reader in response. Suitably compact RFID tag and antenna combinations are available which can be fitted unobtrusively into or onto a security document such as a passport.

However, one problem with such RFID tag enabled security documents is that the data on the RFID tag could be read remotely by a reader module without the knowledge of the security document's owner. An unscrupulous individual in possession of a suitable reading device could interrogate the information on the chip and thereby discover a range of personal or security information which could be used, for example, to commit identity theft.

One approach to overcoming such problems is disclosed in WO2006/013489, in which an electromagnetic shield is provided in the security document to prevent reading of the RFID tag. In the example described, an RFID tag and antenna is positioned in one cover of a passport, and an electromagnetic shield in the other. This prevents the tag from being read when the book is closed, but does not interfere with chip reading when the book is open.

However, there is still a need to provide such an RFID tag enabled document with additional security features which can identify the document as genuine. Moreover, there is a constant need that such security features should be simple to detect so that untrained personnel can easily and confidently make decisions as to the authenticity of the document. Many of the approaches described above require expensive machinery to allow detection, or require the person doing the authentication to make a judgement of sorts. It would be desirable to provide a detectable feature that can be both authenticated rapidly and unambiguously by those that are relatively unskilled in inspecting security features.

The present invention is intended to be used with many types of security documents including banknotes, postal stamps, fiscal stamps, vouchers, cheques, bonds, certificates of authenticity, tax documents, passports, identity documents, brand protection uses, security threads, applied security devices, and security labels.

According to the present invention, a security document is provided which comprises a radio frequency identification (RFID) tag, an RFID tag antenna, an electromagnetic shield for restricting interrogation of the RFID tag through the RFID tag antenna, and an electrostatic charge indicating device for generating a radio frequency (RF) signal, the electrostatic charge indicating device comprising a plurality of conductive particles of predetermined dimensions disposed in intimate contact with a material which exhibits a triboelectric property such that electrostatic charge built up on the material with the triboelectric property will discharge through the conductive particles, thereby generating the RF signal.

It has been found that triboelectric effects can be used to provide a secure, rapid and simple device, for example, for authenticating security documents. By providing the security documents with a shielded RFID tag as well as a triboelectric feature, not only is the information on the RFID tag more secure, but the document can readily be authenticated by a non-skilled person.

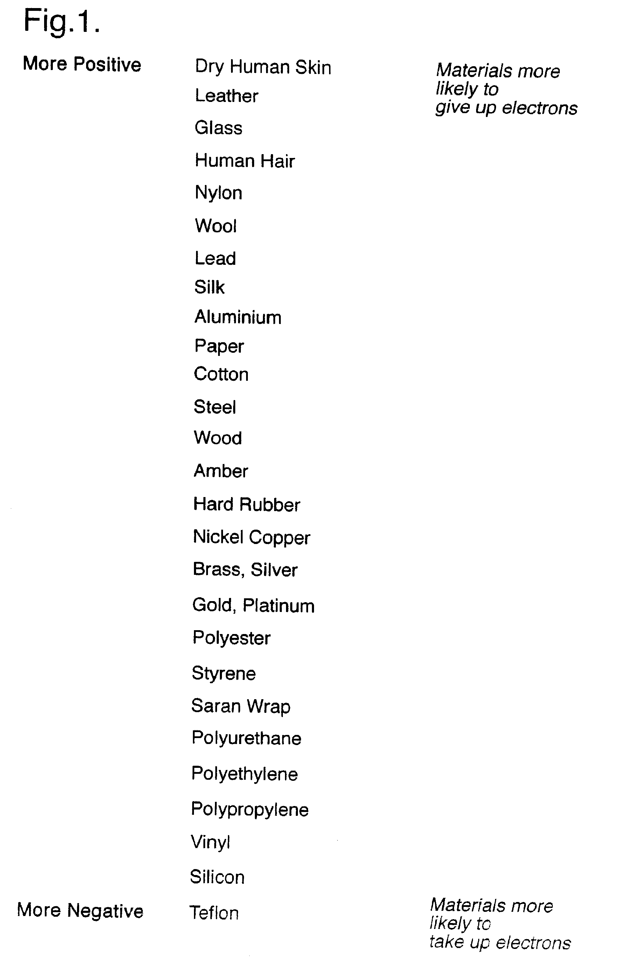

The principles on which the triboelectric feature works are described in detail in our co-pending British Patent Application No. 0502359.3. To summarize, the triboelectric effect is more commonly referred to as static and means electricity which is generated by friction between two materials. Figure 1 illustrates the triboelectric series and shows materials in order of how likely they are to gain or give up electrical charge from or to other materials. For the purposes of this document, those materials towards the bottom of Figure 1 (i.e. those more likely to pick up electrons) are referred to as high TE. Those materials towards the top of Figure 1 (i.e. those more likely to give up electrons) are referred to as low TE. By selecting a triboelectric material and positioning it closely with conductive fibres or particles such as metal or carbon, a detectable triboelectric feature is formed. Where the triboelectric material is high TE, it attracts electrons which are then rapidly discharged through the conductive fibres to achieve electric potential uniformity. As a result of the discharge process, a current is formed in the fibre and this has a characteristic radio frequency (FR) emission associated with it. This RF emission can then be detected and used as a means for authentication.

It has been found that low TE materials can also be used in combination with conducting fibres but high TE materials are preferred. It is thought that the low TE materials work as charge distribution effects still occur, though to a lesser extent than for high TE materials.

In order for a build up of electrons to occur, which leads to the discharge process, the triboelectric material and the conductive fibres must move relative to one another. As described for the first time in the above British application, the triboelectric effect can still be observed when the two materials cannot move freely relative to one another, if the assembly is manipulated by impact, rubbing, flexing or stroking for example. Essentially, the security document must simply be handled or undergo some form of motion in order to generate the RF signal from the triboelectric feature. Thus, authentication of the security document having a triboelectric feature may be carried out easily by an unskilled user having a RF detector tuned to the appropriate wavelength range as will be described in more detail below.

Preferably, the RFID tag antenna is located in a first region of the security document, and the electromagnetic shield is located in a second region of the security document, the first and second regions of the security document being movable relative to one another. Movement between the RFID tag antenna and the shield permits the degree of interference caused by the shield to be varied by moving the two components relative to one another.

In a particularly preferred embodiment, the first and second regions of the security document are movable between a shielded position, in which the electromagnetic shield obstructs interrogation of the RFID tag, and a reading position, in which the electromagnetic shield substantially does not obstruct interrogation of the RFID tag. This permits the RFID tag information to be protected when the security document is in a first configuration (the shielded position) yet permits reading of the data when the document is manipulated into a second position. Thus, the owner of the security document has control over when the data on the RFID tag can be accessed.

Advantageously, at least some of the conductive particles are integrally formed with the electromagnetic shield. This configuration makes it possible to use the electromagnetic shield itself as part of the triboelectric feature. Thus, manufacturing costs can be reduced and processing simplified.

Conveniently, the conductive particles comprise fibres, flakes or wires. It has been found that by selecting the type, length and size of the fibres, some control can be imparted on the frequency of the RF emission. This in turn leads to the possibility of differentiation or coding. Fibres of equal length and dimension prepared in a uniform and unbent or curved manner, such that they resemble straight rods, will result in emission frequencies of preferred frequency or frequencies. If the fibres are allowed to be of inconsistent length and dimension or if they are tangled, bent or otherwise non-uniform in length, then a broadband frequency emission will result. It is preferred that the emission frequency spectra be as sharp as possible. It is also thought the ability to control the resonant length of fibres allows for a sharper pulse width. It is preferred that the pulse width be as sharp as possible. However this requires the use of rigid rod-like fibres which is not always compatible with production issues. There is consequently a compromise between pulse width and manufacturing capability.

The intensity of the emission is directly correlated to the number of fibres present. A higher concentration of fibres results in a greater signal intensity. The more fibres that are present, the greater the number of discharge events so the larger the amount of RF given off. Either the frequency or intensity of emission could be used for authentication or coding purposes. Alternatively a more complex system might use a combination of both intensity and frequency.

Preferably, the conductive particles have a length in the range 0.1 to 40 mm, preferably 1 to 30 mm, still preferably 1 to 10 mm, most preferably approximately 5 mm. Advantageously, the particles have a width in the range 10 to 100 microns. Preferably, the particles have substantially the same size.

Preferably, the concentrations of particles in the material is in the range 1 to 70 wt%, preferably 5 to 50 wt% and most preferably substantially 10 wt%. This not only applies to configurations where the particles are disposed within the material but may also apply where the particles are disposed adjacent the material.

Preferably, the particles are made of carbon, a metal or include a metallic component. Advantageously, the metal comprises one of steel, stainless steel, nickel, gold, silver and platinum. Alternatively, the particles could comprise a metalised polymer such as PET.

It is preferred that the material with the triboelectric property is an electrical insulator and advantageously, the material with triboelectric property is a polymer. Conveniently, the polymer could be PET, BOPP, MOPP, PPC, BOPET, PBT, PETG, PC, nylon or Teslin^{™}.

Conveniently, the material with the triboelectric property is provided in the form of a strip disposed adjacent to the conductive particles. Preferably, the strip has a width of approximately 10 mm. Advantageously, an adhesive is provided which exhibits a triboelectric property, the adhesive securing the conductive particles and/or the electromagnetic shield to the security document.

Preferably, the electromagnetic shield is of sufficient dimensions to at least partially cover the RFID antenna. More preferably, the electromagnetic shield is of sufficient dimensions to cover all of the RFID antenna. Advantageously, the electromagnetic shield comprises a metal mesh, woven metal or metalised fabric. It is preferred that the electromagnetic shield comprises a nickel/copper metalised synthetic fabric.

Preferably, the electromagnetic shield has a thickness of between 10 and 150 microns, preferably 50 to 120 microns, more preferably approximately 100 microns.

In a particularly preferred embodiment, an edge of the electrical magnetic shield is disposed adjacent to the material with a triboelectric property, the edge of the electromagnetic shield providing the conducting particles. Conveniently, the edge of the electromagnetic shield is frayed such that discrete fibres are provided adjacent the material with the triboelectric property.

As already mentioned, the security document may constitute any one of a banknote, a postal stamp, a fiscal stamp, a voucher, a cheque, a bond, a certificate of authenticity, a tax document, a passport, an identity document, brand protection use, a security thread, an applied security device and a security label.

Preferably, the security document has the form of a booklet having at least a front cover and a back cover. It is preferred that the RFID antenna is disposed on or in one of the front and back covers of the booklet and the electromagnetic shield is disposed on or in the other of the front and back covers, the electromagnetic shield being arranged to at least partially cover the RFID antenna when the booklet is closed.

Preferably, the electromagnetic shield is arranged to cover substantially the whole of the RFID tag antenna when the book is closed. Advantageously, the electromagnetic shield is laminated into the front or back cover of the book using a lamination adhesive which more preferably exhibits a triboelectric effect.

The invention will now be described in more detail by way of examples and by reference to the following Figures, in which;
Figure 1 illustrates the triboelectric series showing materials and their relative affinity for electrons;
Figure 2 shows a cross-section through an example of a security document according to the invention;
Figure 3 shows a plan view of the security document shown in Figure 2; and
Figure 4 shows a schematic diagram of a detector assembly.

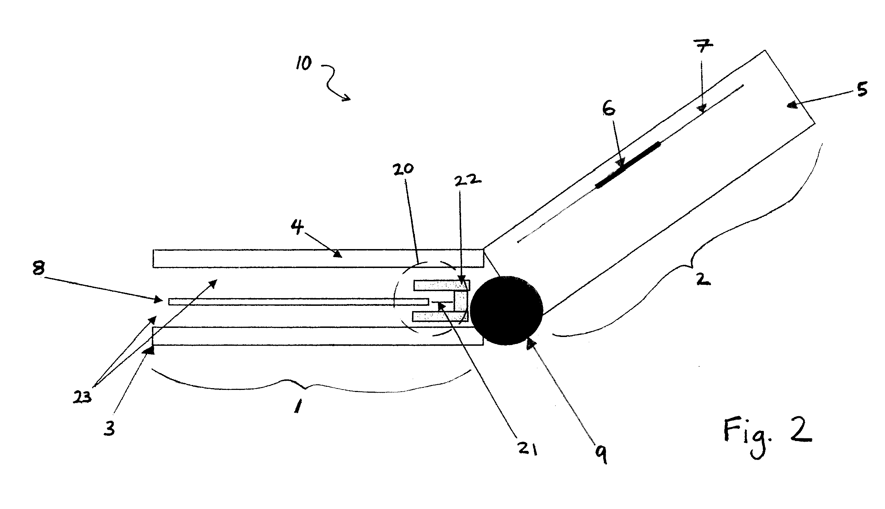

Figure 2 illustrates how the present invention might be implemented in the form of a passport or other security document having the form of a booklet. The security document 10 has first and second regions 1 and 2 which are movable with respect to one another about hinge 9, which represents the booklet binding. In this example, the first region 1 comprises the front cover of the booklet and the second region 2 comprises the back cover. Typically, one or more pages will be provided between the front and back covers, however these are omitted from Figure 2 for clarity. Similarly, the front cover is shown here to consist of an outer ply 3 and an inner ply 4, but it will be appreciated that the front cover can be made up of more or fewer plies. Likewise, the back cover 5 is shown as a monolithic ply whereas it may in practice constitute two or more layers. Often, the front and back covers may be formed of a continuous sheet of material having one or more layers and hinge 9 being provided by a fold or weakened zone in the material. The covers are commonly formed of paper or plastic, and may be laminated.

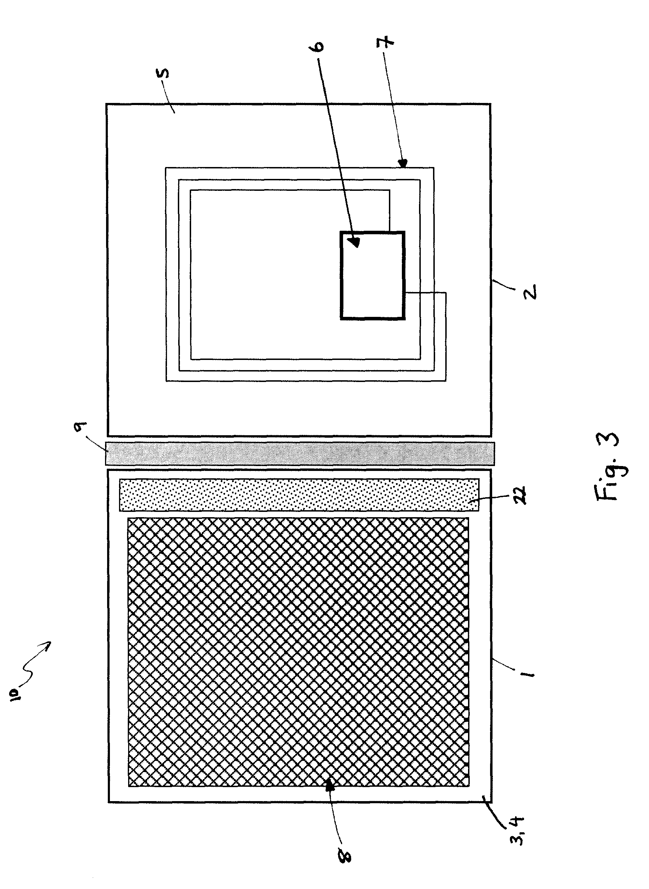

In this example, an RFID tag 6 and RFID antenna 7 are disclosed in the rear cover 5 of the booklet. However, it will be appreciated that the RFID tag 6 and its antenna 7 need not be located in the same region of the document 10, but could for example be positioned separate from one another (yet still electrically connected). For example, the RFID tag 6 could be located on the front cover with the antenna 7 remaining on the rear cover. An electromagnetic shield 8 is located in the front cover between inner and outer plies 3 and 4. This can be seen in plan view in Figure 3.

The RFID tag 6 comprises an integrated circuit and can be readily obtained from a number of commercial sources, such as Philips, Infineon and Texas Instruments. The RFID tag 6 is connected to an antenna 7 which consists of a conductive track or wire which may be embedded in the rear cover 5. Alternatively, the RFID tag 6 and antenna 7 may be incorporated in an additional layer, such as a label, which is adhered to the surface of the cover 5.

On the RFID tag 6 is stored information such as biometric data, personal data relating to the owner of the booklet 10 and/or security data such as passwords or pass codes. The RFID tag 6 may include a power source, but typically it will be a passive RFID tag, that is it will be powered by a current induced in antenna 7 when interrogated by a suitable detector system. On activation, the RFID tag 6 will emit a signal via antenna 7 which includes some or all of the data stored thereon. This signal can be detected and decoded by a suitable reader system, examples of which, such as the SCM Microsystems SCR 331, are readily available and fully described in the prior art.

The electromagnetic shield 8 comprises a layer of conductive material such as a metal mesh, a metal weave or a metalised fabric. In the present example, the shield 8 is provided only in the front cover of the booklet, that is the region of the document 10 which does not also contain the RFID tag antenna 7. However, in other examples it may be desired to provide the shield 8 in both regions 1 and 2. This approach, known as the "Faraday Cage" approach, has been found to very successfully prevent a reader from interrogating the tag 6 when the booklet is closed. However, with the booklet open, the read signal may also be severely affected. Thus it is preferred that the shield 8 should be located only in a region of the document 10 which does not also contain the tag antenna 7.

The shield is designed to change the resonant frequency of the antenna 7 and/or alter its Q factor (damping) by a mutual induction effect. However, this effect only occurs when the shield 8 and antenna 7 are in close proximity, i.e. when the booklet is closed (that is the front and back covers are pivoted about hinge 9 such that the inner ply 4 of the front cover lies adjacent to the inner surface of rear cover 5). As such, closed book reading of the RFID tag 6 is disrupted, or preferably prevented, by the presence of the shield 8. For example, the proximity required of a reading device in order to successfully interrogate the chip may be reduced to such a distance that covert chip reading is not possible or very difficult. With the book open, the shield 8 is sufficiently far from the antenna 7 to cause little or no effect, and the tag 6 can then be interrogated by a suitable reader.

It has been found that the most effective screening results are achieved when the dimensions of the shield 8 are such that, when the booklet is closed, the entire antenna 7 is covered by the shielding material. In other words, the shield 8 extends over a greater area than does the antenna 7. However, depending on the shielding material used and the degree of signal disruption desired, it may in other embodiments be desirable that the shield 8 covers only part of the antenna 7. The shield 8 can be made of any suitable conductive material including nickel, copper, steel, stainless steel, gold, silver and platinum, or a conductive polymer such as metallised PET. However, the most efficient material has been identified as a nickel/copper metalised synthetic fabric. A suitable fabric is available from TBA Electro Conductive Products in Rochdale, Lancashire, UK. A shield thickness of approximately 100 microns has been identified as providing a suitable shielding effect, however, other thicknesses may also be appropriate. The shield 8 is preferably laminated into the front cover of the booklet.

An electrostatic charge indicating device 20 is provided in the security document 10 to aid authentication of the document. In this example, the device or "triboelectric feature" 20 is located in the first region 1, that is the front cover of the booklet, alongside the electromagnetic shield 8.

The principles on which the triboelectric feature 20 operates, and further details of how it may be implemented, may be found in our co-pending British Patent Application No. 0502359.3. As described therein, the triboelectric effect requires the provision of conductive particles and a triboelectric material in close proximity to one another. For example, small lengths of metal fibre may be provided in a loose matrix of insulating (polymeric) material. Flexing, opening or otherwise handling the booklet 10 causes a charge to build up on the triboelectric material which is then discharged through the conductor fibres emitting a characteristic radio frequency. It has been found that the booklet requires only minimal handling to create a signal, for example simply picking the book up causes sufficient charge accumulation.

In the example shown in Figures 2 and 3, the triboelectric material 22 is provided in the form of a strip disposed in the front cover between inner and outer plies 3 and 4. The strip runs alongside the binding 9 of the booklet 10. The strip of material 22 is typically made of a polymer such as PET, BOPP, MOPP, PPC, BOPET, PBT, PETG, PC, nylon or Teslin^{™} PET film has been found to be particularly effective. In this example, the strip 22 is approximately 10 mm wide, however the dimensions will of course depend on the application in question.

Conductive particles 21 are disposed in close proximity to the triboelectric material 22. In the example shown, the strip of material 22 has a U-shaped cross-section and the conductive particles 21 are disposed within the hollow of the U-shape. This allows for close contact between the conductive particles 21 and the triboelectric material 22 on three out of four sides of the conductive particles.

The conductive particles 21 may for example be in the form of steel fibres having an average length of 5 mm and width of 50 microns. Alternative to steel fibres include stainless steel flakes (in either leafing grade or water grade), nickel flakes, copper, gold, silver or platinum fibres/flakes or any material with good conductivity that is metallic or non-metallic. It has also been found that pieces of metallised PET can also be used if cut into the correct dimensions. As mentioned above, flakes can be used but it is preferred to use fibres or more preferably rigid rod-like structures. Dimensions of the materials should fall within the range 0.1 to 40 mm in length and 10 to 1000 microns in width.

In some embodiments, the triboelectric material strip 22 may be made of more than one triboelectric material. For example, as an alternative to using the same polymeric material on either side of the U-shaped strip construction, two different polymeric materials could be used. Specifically, one of the materials could be high TE, for example BOPP, and the other a low TE, e.g. nylon. As before, the conductive particles 21 are situated in the hollow of the "U", between the two triboelectric materials. This construction can be more effective as the low TE materials gives electrons up to the high TE material, thus allowing for a stronger signal.

The triboelectric feature 20 is preferably laminated between inner and outer plies 3 and 4 of the booklet cover using an adhesive 23. This adhesive may also hold other features such as the electromagnetic shield 8 in place. It is preferable that the adhesive itself has triboelectric properties and as such can contribute to the signal emitted by the triboelectric feature. Pressure and heat sensitive adhesives are widely known to those skilled in the art and in a preferred example an adhesive or binding agent with a high TE should be used, one example being Sericol Seristar SX Screen Binder. In this example, the TE adhesive 23 may surround the conductive particles 21, holding them in position. In some cases, the conductive particles 21 may be premixed with the adhesive 23 prior to assembling the booklet 10.

In one example, the edge of electromagnetic shield 8 may provide the conductive particles 21. For example where the shield 8 is made of a metallic or otherwise conductive mesh, the edge of the mesh adjacent the triboelectric material strip 22 could be frayed so as to give discrete wires of millimetric dimensions. Such wires will be arranged to be in close proximity with the triboelectric material 22 to provide for the discharge of any charge built up on the material 22, resulting in the characteristic RF emission.

The dimensions of the conducting particles 21 will be selected in order to produce an RF emission having a characteristic frequency or frequencies. For example, if all of the conductive particles 21 are selected to have substantially the same dimensions, a narrow band frequency signal will be emitted. This is preferable since the detector can be tuned to identify a particular frequency and this aids authentication of the booklet 10. Alternatively, a proportion of the conductor particles 21 could have first a first set of dimensions and a second proportion could have a second set of dimensions. This would result in two narrow band emissions at characteristic frequencies and it will be appreciated that this aids authentication and increases the difficulty of counterfeiting. Any number of characteristic frequency emissions could be generated in this way, making it possible to add coding to the triboelectric feature 20. Similarly, the more fibres that are provided having the same dimensions, the stronger the intensity of the corresponding frequency emission. This to could be used, either alone or in combination with varying dimensions of the conductor particles 21, to add coding to the RF signal.

It will be clear from the above that the conductive fibres 21 are unable to move freely relative to the triboelectric material 22 and any triboelectric adhesive 23 which may be provided, yet the triboelectric effect is still observed. This can be explained by the fact that the triboelectric material (strip 22) when triboelectrically charged will not have a fully uniform charge distribution because its high electrical ohmic resistance value prevents it. Nonetheless, simple mechanical flexing of the booklet 10 will encourage the movement of this non-uniform charge potential, some of which will then transfer to the conductive fibres 21. The excess charge then rapidly discharges and results in the characteristic RF emission as described earlier.

Once formed, the booklet construction can be printed or treated as any other security document by printing on the front and/or back covers and the internal pages (not shown). In some cases, at least some of the printing may take place before the RFID tag 6 and antenna 7 are incorporated into the booklet cover. The security document may be provided with additional security features that are well known in the prior art such as holograms, fine line printing and machine readable coding such as bar codes.

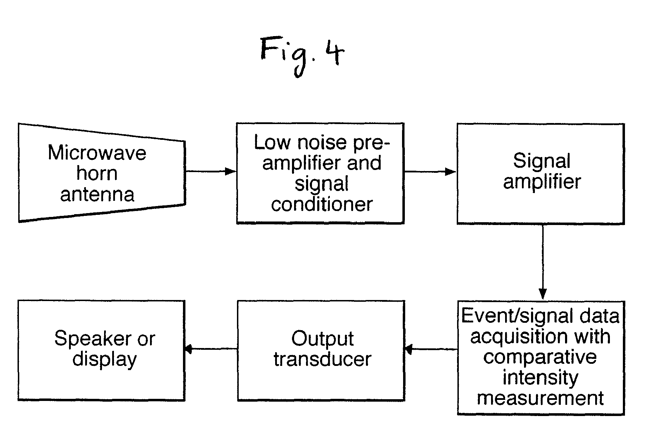

Figure 4 illustrates a suitable detector arrangement for detecting a signal emitted by the triboelectric feature 20 described above. The detector arrangement consists of a standard detection system that will be familiar to those skilled in the art. At the frequencies of interest here, typically in the microwave range, a detector horn or similar is used to concentrate emitted radiation into a low noise detector head and preamplifier. This detector head and preamplifier can be tuned to detect frequencies within a specific range if required. The relatively low intensity signal detected is then conditioned into a form suitable for further amplification by conventional means into a signal for use in a comparator circuit. This comparator circuit is used to discriminate real signals from background noise. The output from the comparator circuit is then used to switch to transducer output, such as a light, buzzer or other similar device that will indicate to the user the successful detection of RF radiation of interest.

## Claims

1. A security document comprising a radio frequency identification (RFID) tag, an RFID tag antenna, an electromagnetic shield for restricting interrogation of the RFID tag through the RFID tag antenna, and an electrostatic charge indicating device for generating a radio frequency (RF) signal, the electrostatic charge indicating device comprising a plurality of conductive particles of predetermined dimensions disposed in intimate contact with a material which exhibits a triboelectric property such that electrostatic charge built up on the material with the triboelectric property will discharge through the conductive particles, thereby generating the RF signal.

2. A security document according to claim 1 wherein the RFID tag antenna is located in a first region of the security document, and the electromagnetic shield is located in a second region of the security document, the first and second regions of the security document being movable relative to one another.

3. A security document according to claim 2 wherein the first and second regions of the security document are movable between a shielded position in which the electromagnetic shield obstructs interrogation of the RFID tag and a reading position in which the electromagnetic shield substantially does not obstruct interrogation of the RFID tag.

4. A security document according to any of the preceding claims wherein at least some of the conductive particles are integrally formed with the electromagnetic shield.

5. A security document according to any of the preceding claims wherein the conductive particles comprise fibres, flakes or wires.

6. A security document according to claim 5 wherein the particles have a length in the range 0.1 - 40 mm, preferably 1 - 30 mm, still preferably 1 - 10 mm, most preferably approximately 5 mm.

7. A security document according to claim 5 or claim 6 wherein the particles have a width in the range 10 - 100 microns.

8. A security document according to any of the preceding claims wherein the particles have substantially the same size.

9. A security document according to any of the preceding claims wherein the concentration of the particles in the material is in the range 1 to 70 wt%, preferably 5 to 50 wt%, most preferably substantially 10 wt%.

10. A security document according to any of the preceding claims wherein the particles are made of carbon, a metal, or include a metallic component.

11. A security document according to claim 10 wherein the metal comprises one of steel, stainless steel, nickel, gold, silver and platinum.

12. A security document according to claim 10 wherein the particles comprise a metallized polymer such as PET.

13. A security document according to any of the preceding claims, wherein the material with the triboelectric property has a high TE.

14. A security document according to any of the preceding claims, wherein the material with the triboelectric property is an electrical insulator.

15. A security document according to any of the preceding claims, wherein the material with the triboelectric property is a polymer.

16. A security document according to claim 15, wherein the polymer is one of PET, BOPP, MOPP, PPC, BOPET, PBT, PETG, PC, nylon and Teslin^{™}.

17. A security document according to any of the preceding claims wherein the material with the triboelectric property is provided in the form of a strip disposed adjacent to the conductive particles.

18. A security document according to claim 17 wherein the strip has a width of approximately 10 mm.

19. A security document according to any of the preceding claims further comprising an adhesive which exhibits a triboelectric property, the adhesive securing the conductive particles and/or the electromagnetic shield to the security document.

20. A security document according to any of the preceding claims wherein the electromagnetic shield is of sufficient dimensions to at least partially cover the RFID antenna.

21. A security document according to claim 20 wherein the electromagnetic shield is of sufficient dimensions to cover all of the RFID antenna.

22. A security document according to any of the preceding claims wherein the electromagnetic shield comprises metal mesh, woven metal or metallized fabric.

23. A security document according to claim 22 wherein the electromagnetic shield comprises a nickel/copper metallized synthetic fabric.

24. A security document according to any of the preceding claims wherein the electromagnetic shield has a thickness of between 10 and 150 microns, preferably 50 to 120 microns, more preferably approximately 100 microns.

25. A security document according to any of the preceding claims wherein an edge of the electromagnetic shield is disposed adjacent to the material with the triboelectric property, the edge of the electromagnetic shield providing the conducting particles.

26. A security document according to claim 25 wherein the edge of the electromagnetic shield is frayed such that discrete fibres are provided adjacent to the material with the triboelectric property.

27. A security document according to any of the preceding claims, wherein the security document constitutes one of a banknote, a postal stamp, a fiscal stamp, a voucher, a cheque, a bond, a certificate of authenticity, a tax document, a passport, an identity document, brand protection use, a security thread, an applied security device and a security label.

28. A security document according to any of the preceding claims wherein the security document has the form of a booklet having at least a front cover and a back cover

29. A security document according to claim 28 wherein the RFID antenna is disposed on or in one of the front and back covers of the booklet and the electromagnetic shield is disposed on or in the other of the front and back covers, the electromagnetic shield being arranged to at least partially cover the RFID antenna when the booklet is closed.

30. A security document according to claim 29 wherein the electromagnetic shield is arranged to cover substantially the whole of the RFID antenna when the booklet is closed.

31. A security document according to any of claims 28 to 30 wherein the electromagnetic shield is laminated into the front or back cover of the booklet using a lamination adhesive.

32. A security document according to claim 31 wherein the lamination adhesive exhibits a triboelectric effect.
